# EUROPÄISCHE PATENTSCHRIFT

(11) **EP 2 156 169 B1**
(45) Veröffentlichungstag und Bekanntmachung des Hinweises auf die Patenterteilung: **31.10.2018**
(21) Anmeldenummer: 08758797.8
(22) Anmeldetag: 28.05.2008
(51) Int. Cl.: G01N 21/90, G01B 11/04, G01B 11/245, G01B 11/24, B65C 9/06

(54) **OPTO-ELEKTRISCHES ERFASSUNGSSYSTEM**
OPTOELECTRIC DETECTION SYSTEM
SYSTÈME DE DÉTECTION OPTOÉLECTRIQUE

(30) Priorität: 31.05.2007 DE 102007025524
(43) Veröffentlichungstag der Anmeldung: 24.02.2010
(73) Patentinhaber: KHS GmbH, 44143 Dortmund (DE)
(72) Erfinder: VOLKWEIN, Frank Joachim, 64297 Darmstadt (DE); BUCHWALD, Carsten, 53498 Bad Breisig (DE)
(86) Internationale Anmeldenummer: PCT/EP2008/004212
(87) Internationale Veröffentlichungsnummer: WO 2008/145346

(56) Entgegenhaltungen:
- EP-A- 0 222 959
- WO-A-01/55705
- DE-A1- 10 140 010
- DE-A1- 10 257 749
- DE-C1- 4 022 733
- US-A- 4 584 469
- US-A- 5 729 340

## Beschreibung

Die Erfindung bezieht sich auf ein System gemäß Oberbegriff Patentanspruch 1.

In Behälterbehandlungsmaschinen, beispielsweise in Etikettiermaschinen sind optoelektrische Erfassungssysteme zum Erfassen von Profil- und/oder Gestaltungsmerkmalen an Behältern bekannt, und zwar speziell auch zum Ausrichten von Behältern im Bezug auf diese Merkmale dann, wenn Etiketten oder andere Ausstattungselemente auf die Behälter in einem vorgegebenen räumlichen Bezug zu den Profil- und/oder Gestaltungsmerkmalen aufgebracht werden sollen.

Derartige Systeme bestehen in der Regel aus wenigstens einer elektronischen Kamera zur Erfassung oder Abbildung des jeweiligen Profil- und/oder Gestaltungsmerkmals und aus einer zugehörigen Beleuchtungseinrichtung. In einer beispielsweise rechnergestützten Bildverarbeitungseinrichtung erfolgt dann die Auswertung der von der Kamera gelieferten Bilddaten, und zwar beispielsweise zum Ausrichten der Behälter durch Drehen oder Schwenken um ihre Behälterachse. Werden auf ein und derselben Anlage Behälter unterschiedlicher Ausgestaltung bzw. mit unterschiedlichen Profil- und/oder Gestaltungsmerkmalen verarbeitet, ist oftmals eine eindeutige Auswertung der von der wenigstens einen Kamera gelieferten Bilddaten nicht oder nur sehr bedingt möglich.

Ein derartiges System wurde beispielsweise durch die DE 102 57 749 A1 vorgestellt. Mehr im Detail betrifft diese Schrift eine Vorrichtung zum Inspizieren von gefüllten und verschlossenen Gefäßen. Dabei besteht diese Vorrichtung aus einem Karussell in dem die zu prüfenden Gefäße so schnell um ihre Längsachse gedreht werden, dass die in den Gefäßen enthaltene Flüssigkeit eventuell in den Gefäßen befindliche, auf dem Boden des Gefäßes liegende Fremdkörper aufgewirbelt werden um anschließend durch eine Inspektionseinrichtung erkannt werden zu können. Nachteilig an dieser Vorrichtung ist, dass sie keine ausreichenden Möglichkeiten zur räumlichen Verstellung der notwendigen Beleuchtung bzw. der vorhandenen Kamera vorsieht.

Ein weiteres System wurde durch die DE 40 22 733 C1 vorgestellt. Dabei sieht diese Schrift mehr im Detail eine Möglichkeit zur Höhenverstellung zwischen Kamera und Beleuchtungssystem vor. Weitere Verstellmöglichkeiten, welche eine verbesserte Beleuchtung stark konturierter Behältergeometrien vorsieht, werden von allerdings auch von dieser Schrift nicht vorgestellt.

Aufgabe der Erfindung ist es, ein Erfassungssystem aufzuzeigen, welches diese Nachteile vermeidet. Zur Lösung dieser Aufgabe ist ein Erfassungssystem entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel erläutert. Es zeigen:
Fig. 1 in schematischer Teildarstellung einen Vertikalschnitt durch einen Drehtisch mit einer auf einem Drehteller angeordneten Flasche und mit einem seitlich vom Drehtisch angeordneten opto-elektrischen Erfassungssystem zur Erfassung von Profil- und/oder Gestaltungsmerkmalen der auf dem Drehtisch vorbeibewegten Flaschen;
Fig. 2 in vereinfachter Teildarstellung eine Draufsicht auf den Drehtisch sowie auf eine Kameraanordnung des opto-elektrischen Systems der Figur 1;
Fig. 3 in einer Darstellung wie Figur 2 den Drehtisch, zusammen mit der Beleuchtungseinrichtung des opto-elektrischen Erfassungssystems der Figur 1.

In den Figuren ist 1 ein um eine vertikale Maschinenachse VA in einer Drehrichtung A umlaufend antreibbarer Drehtisch einer Flaschen- oder Behälterbehandlungsmaschine, beispielsweise einer Etikettiermaschine. Am Umfang des Drehtisches 1 sind um die Achse VA verteilt mehrere als Drehteller 2 ausgebildete Behälterträger vorgesehen, die jeweils um eine vertikale Drehtellerachse DA durch einen Dreh- oder Stellantrieb 3 individuell gesteuert dreh- oder schwenkbar sind. Für die Behandlung, beispielsweise für das Etikettieren ist auf jedem Drehteller 2 eine Flasche 4 mit dem Flaschenboden aufstehend und mit der Flaschenachse achsgleich oder im Wesentlichen achsgleich mit der Achse DA angeordnet. Durch Stempel 5 sind die Flaschen 4 auf dem jeweiligen Drehteller 2 gegen Umfallen gesichert.

Die Flaschen 4 sind an ihrer Außenfläche mit einem auffallenden Profil- und/oder Gestaltungsmerkmal 4.1 versehen. Das jeweilige Profil- und/oder Gestaltungsmerkmal 4.1 kann unterschiedlichster Art sein, beispielsweise in Form eines dreidimensionalen, erhabenen Profils oder Gestaltungsmerkmals oder eines vertieften, dreidimensionalen Profils oder Gestaltungsmerkmals an der Außenfläche der Flaschen 4, beispielsweise auch in Form von Siegeln, Embossings, Verzierungen usw. Weiterhin kann das Profil- und/oder Gestaltungsmerkmal auch zweidimensionaler Art sein.

Beispielsweise zum Aufbringen von Etiketten 6 in einer vorgegebenen räumlichen Zuordnung zu dem jeweiligen Profil- und/oder Gestaltungsmerkmal 4.1 ist es erforderlich, durch entsprechende Ansteuerung des jeweiligen Antriebs 3 die auf dem zugehörigen Drehteller 2 angeordnete Flasche 4 um die Achse DA gesteuert so zu drehen, dass sie im Bezug auf ihr Profil- und/oder Gestaltungsmerkmal 4.1 spätestens dann eine vorgegebene Orientierung aufweist, wenn sie mit dem Drehtisch 1 an einem nicht dargestellten Etikettieraggregat der Behandlungsmaschine vorbeibewegt wird.

Die einzelnen Flaschen 4 werden der Behandlungsmaschine bzw. den Drehtellern 2 über einen Transporteur und einen Flascheneinlauf aufrecht stehend in einer willkürlichen Orientierung hinsichtlich der Profil- und/oder Gestaltungsmerkmale 4.1 zugeführt. Um diese willkürliche Orientierung (Istwert) zu erfassen und die für die geforderte Orientierung notwendige Drehbewegung des jeweiligen Drehtellers 2 um die Achse DA zu steuern ist an einem mit dem Drehtisch 1 nicht umlaufenden Teil der Behandlungsmaschine ein opto-elektrisches Erfassungssystem 7 vorgesehen, und zwar u.a. mit einer Kameraanordnung 8 und einer Beleuchtungseinrichtung 9. Das Erfassungssystem 7 ist bei der dargestellten Ausführungsform an der der Achse VA abgewandten Seite der kreisförmigen Bewegungsbahn des Drehtellers 1 angeordnet, d.h. radial außerhalb dieser Bewegungsbahn.

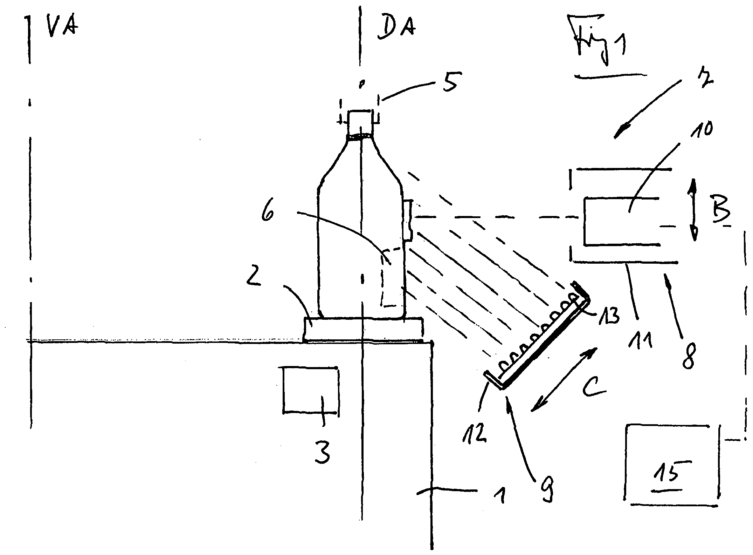

Die Kameraanordnung 8 besteht bei der dargestellten Ausführungsform aus insgesamt vier elektronischen Kameras 10, die in einem gemeinsamen Gehäuse 11 angeordnet sind, und zwar derart, dass mit jeder Kamera 10 die auf den Drehtellern 2 des Drehtisches 1 stehenden Flaschen 4 auf jeden Fall im Bereich ihrer Profil- und Gestaltungsmerkmale 4.1 bildlich erfasst werden. Wie mit dem Doppelpfeil B in der Figur 1 angedeutet, sind die einzelnen Kameras 10 beispielsweise individuell, aber auch das Gehäuse 11 insgesamt verstellbar vorgesehen, und zwar für eine Höhenverstellung in der vertikalen Achse, für eine Einstellung des Abstandes zwischen Kameraanordnung 8 und Drehtisch 1 in einer horizontalen Achse, für ein Schwenken der Kameraanordnung 8 um eine horizontale Achse parallel zu einer gedachten Tangente an den Drehtisch 1 bzw. Kreisbahn der Drehteller 2 und für ein Schwenken um eine vertikale Achse.

Weiterhin sind die Kameras 10 in dem Gehäuse 11 so angeordnet, dass jede Kamera 10 etwa denselben Abstand von der Bewegungsbahn aufweist, auf der sich die Drehteller 2 bzw. deren Achsen DA bewegen.

Die Beleuchtungseinrichtung 9 ist als gekrümmtes, mit ihrer konkaven Seite dem Drehtisch 1 zugewandtes und diesen Drehtisch auf einem Teil seines Umfangs mit Abstand umschließendes und sich in Drehrichtung A erstreckendes Leuchtband ausgebildet und besteht u.a. aus einem entsprechend gekrümmten, wannenartigen Gehäuse 12, in welchem eine Vielzahl von elektrisch betriebenen, Licht aussendenden Elementen 13 in Form von LEDs vorgesehen sind.

Die von den LEDs 13 gebildete LED-Anordnung ist beispielsweise segmentiert, d.h. sie besteht u.a. aus mehreren in Längsrichtung des Gehäuses 12 und dabei in etwa in Drehrichtung A des Drehtisches 1 aufeinander folgenden LED-Segmenten 14 von denen jedes wiederum aus einer Anordnung mit einer Vielzahl von LEDs 13 besteht. Bei der dargestellten Ausführungsform erstreckt sich die Beleuchtungseinrichtung 9 über einen Winkelbereich der Drehbewegung des Drehtisches 1, der (Winkelbereich) größer ist als der von der Kameraanordnung 8 eingenommene Winkelbereich, sodass auch für die bezogen auf die Drehrichtung A des Drehtisches 1 erste sowie letztere Kamera 10 der Kameraanordnung 8 eine optimale Ausleuchtung der vorbeibewegten Flaschen 4 durch die Beleuchtungseinrichtung 9 gewährleistet ist. Die Beleuchtungseinrichtung 9 ist weiterhin einstellbar und schwenkbar, insbesondere auch um wenigstens eine horizontale Achse parallel zu einer gedachten Tangente an die kreisförmige Bewegungsbahn der Drehteller 2 bzw. deren Achsen DA, wie dies in der Figur 1 mit dem Doppelpfeil C angedeutet ist. Hierdurch ist wahlweise eine Beleuchtung der Flaschen 4 bzw. deren Profil- und/oder Gestaltungsmerkmale 4 .1 schräg von unten oder aber schräg von oben jeweils in unterschiedlichen Winkeln sowie seitlich möglich ist. Da auch die Kameraanordnung 8 einstellbar ist, bestehen für das Erfassungssystem beispielsweise folgende Einstellmöglichkeiten:
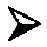 Die Kameraanordnung 8 bzw. die Kameras 10 sind mit ihrer optischen Achse bzw. mit der Achse der Bilderfassung horizontal oder im Wesentlichen horizontal und damit radial oder im Wesentlichen radial zur Achse VA auf die zu erfassenden Profil- und/oder Gestaltungsmerkmale 4.1 ausgerichtet,
   die Beleuchtungseinrichtung 9 ist für eine Beleuchtung der Profil- und/oder Gestaltungsmerkmale 4.1 schräg von unten oder schräg von oben ausgerichtet.
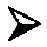 Die Beleuchtungseinrichtung 9 ist für eine seitliche bzw. im Bezug auf die Achse VA radiale oder im Wesentlichen radiale Beleuchtung der Profil- und/oder Gestaltungsmerkmale 4.1 ausgerichtet,
   die Kameraanordnung 8 ist für eine Erfassung bzw. Abbildung der Profil- und/oder Gestaltungsmerkmale 4.1 schräg von unten oder schräg von oben ausgerichtet, d.h. die Kameraanordnung 8 bzw. die Kameras 10 befinden sich unterhalb bzw. oberhalb der Beleuchtungseinrichtung und sind mit ihren optischen Achsen schräg nach oben bzw. schräg nach unten orientiert.

Durch die Einstellung der Kameraanordnung 8 bzw. der optischen Achse der Kameras 10 wird also der Winkel der Bilderfassung verändert. Durch Einstellung der Beleuchtungseinrichtung 9 wird der Winkel, mit dem das Auflicht auf die Flaschen 4 auftrifft, geändert. Die Kameraanordnung 8 sowie die Beleuchtungseinrichtung 9 befinden sich auf einer gemeinsamen Seite der Bewegungsbahn der Flaschen 4. Das Ausleuchten der Flaschen 4 bzw. der Profil- und/oder Gestaltungsmerkmale 4.1 erfolgt somit bei dieser Ausführungsform durch Auflicht.

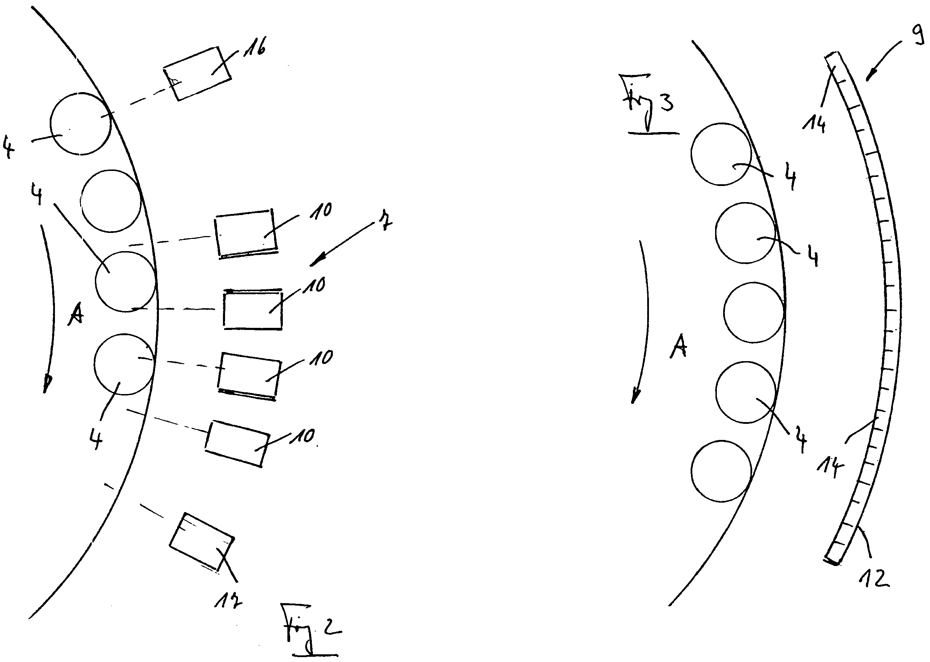

In Abhängigkeit von der jeweiligen Ausbildung der Profil- oder Gestaltungsmerkmale kann somit die Einstellung des opto-elektrischen Erfassungssystems 7 so erfolgen, dass mit den Kameras 10 ein besonders eindeutiges und markantes Bild des jeweiligen Profil- und/oder Gestaltungsmerkmals 4.1 erzeugt wird, und zwar für die Auswertung in einem Bildverarbeitungssystem 15. In diesem werden die von der Kameraanordnung gelieferten Bilddaten mit abgespeicherten Bilddaten verglichen, und zwar zur Ansteuerung des jeweiligen Stellantriebs 3 in der Weise, dass die auf dem jeweiligen Drehteller 2 aufstehende Flasche 4 im Bezug auf ihr Profil- und/oder Gestaltungsmerkmal 4.1 letztlich die vorgegebene Orientierung aufweist, und zwar entsprechend der Figur 2 in der Weise, dass die jeweilige Flasche 4 dann mit ihrem Profil- und/oder Gestaltungsmerkmal 4.1 in Drehrichtung A des Drehtisches 1 orientiert ist.

Mit 16 und 17 sind weitere Kameras bezeichnet, die ebenfalls seitlich vom Drehtisch 1 an einem mit diesem nicht mitbewegten Teil der Behandlungsmaschine vorgesehen sind und mit denen die vorbeibewegten Flaschen erfasst werden. Die Kameras 16 und 17 dienen dann zu Kontrollzwecken, so beispielsweise die in Drehrichtung A dem Erfassungssystem 7 vorausgehende Kamera 16 zur Feststellung bzw. Überprüfung des Vorhandenseins einer Flasche 4 auf dem jeweiligen Drehteller 2 und die in Drehrichtung A auf das Erfassungssystem 7 folgende Kamera 17 zur Feststellung bzw. Überprüfung der exakten Ausrichtung der Flaschen 4.

Die gekrümmte Ausbildung der Beleuchtungseinrichtung 9 hat den Vorteil, dass der Abstand zwischen der Beleuchtungseinrichtung 9 und den Flaschen 4 im gesamten Erfassungsbereich des opto-elektrischen Erfassungssystems 7 konstant oder im Wesentlichen konstant ist.

Durch die Verwendung von mehreren Kameras 10 ist ein Ausrichten der Flaschen 4 auch bei hoher Leistung der Behandlungsmaschine, d.h. bei hoher Drehzahl des Drehtisches 1 möglich. Die von den Kameras 10 gelieferten Bilddaten werden dann beispielsweise so verwendet, dass bei jeweils zunächst kontinuierlich drehendem Drehteller 2 mit Hilfe der in Drehrichtung A ersten oder zweiten Kamera 10 ein vorläufiges Ausrichten der jeweiligen Flasche 4 erfolgt, und z.B. zwar derart, dass die Flaschen 4 letztlich mit ihren Profil- und/oder Gestaltungsmerkmalen 4.1 bezogen auf die Achse VA radial nach außen weisen, wobei dann zwischen der in Drehrichtung A vorletzten und letzten Kamera 10 ein Drehen des Drehtellers 2 um 90° erfolgt, sodass jede Flasche 4 mit ihrem Profil- und/oder Gestaltungsmerkmal 4.1 in Drehrichtung A orientiert ist.

### Bezugszeichenliste

- 1: Drehtisch
- 2: Drehteller
- 3: Stellantrieb für Drehteller
- 4: Flasche oder Behälter
- 4.1: Profil- und/oder Gestaltungsmerkmal
- 5: Stempel
- 6: Etikett
- 7: Opto-elektrisches Erfassungssystem
- 8: Kameraanordnung
- 9: Beleuchtungseinrichtung
- 10: Kamera
- 11, 12: Gehäuse
- 13: LED
- 14: LED-Segment
- 15: Bildverarbeitungseinrichtung
- 16, 17: zusätzliche Kamera
- A: Drehrichtung des Drehtisches 1
- B: Verstellung der Kameras 10 bzw. der Kameraanordnung 8
- C: Verstellung der Beleuchtungseinrichtung 9
- VA: vertikale Maschinenachse
- DA: Drehtellerachse

## Patentansprüche

1. Ein System enthaltend
eine Flaschen- oder Behälterbehandlungsmaschine enthaltend einen Transporteur (1) für Flaschen oder dergleichen Behälter (4) und ein opto-elektrisches Erfassungssystem zum Erfassen von Profil- und/oder Gestaltungsmerkmalen (4.1) von auf dem Transporteur (1) in einer Transportrichtung (A) bewegten Flaschen oder dergleichen Behältern (4), mit wenigstens einer zumindest eine elektronische Kamera (10) aufweisenden Kameraanordnung (8) sowie mit wenigstens einer zugeordneten Beleuchtungseinrichtung (9) zur Beleuchtung der Behälter (4) zumindest im Bereich ihrer mit dem Erfassungssystem zu erfassenden Profil- und/oder Gestaltungsmerkmale (4.1), wobei die wenigstens eine Beleuchtungseinrichtung (9) als bandförmige, sich in Bewegungsrichtung der Behälter (4) erstreckende Lichtquelle ausgebildet ist, und die Beleuchtungseinrichtung (9) und/oder die wenigstens eine Kamera (10) relativ zueinander für unterschiedliche Einfallswinkel des Lichtes und/oder für unterschiedliche Winkel der Bilderfassung einstellbar sind,
**dadurch gekennzeichnet, dass** die wenigstens eine Beleuchtungseinrichtung (9) zwischen einer Position unterhalb der Kameraanordnung (8) und einer Position oberhalb der Kameraanordnung (8) verstellbar ist, und/oder dass die wenigstens eine Kameraanordnung (8) zwischen einer Position unterhalb der Beleuchtungseinrichtung (9) und einer Position oberhalb der Beleuchtungseinrichtung (9) verstellbar ist.

2. System nach Anspruch 1, **dadurch gekennzeichnet, dass** die wenigstens eine Beleuchtungseinrichtung (9) für eine Beleuchtung mit Auflicht ausgebildet ist.

3. System nach Anspruch 1 oder 2, **dadurch gekennzeichnet, dass** die wenigstens eine Kameraanordnung (8) und die wenigstens eine zugehörige Beleuchtungseinrichtung (9) an einer gemeinsamen Seite der Bewegungsbahn der Behälter (4) vorgesehen sind.

4. System nach einem der vorhergehenden Ansprüche, **dadurch gekennzeichnet, dass** die wenigstens eine Kameraanordnung (8) und/oder die wenigstens eine Beleuchtungseinrichtung (9) zwischen einer Position unterhalb einer Bewegungsbahn, auf der sich die Profil- und/oder Gestaltungsmerkmale (4.1) der Behälter (4) bewegen, und einer Position oberhalb dieser Bewegungsbahn verstellbar sind.

5. System nach einem der vorhergehenden Ansprüche, **dadurch gekennzeichnet, dass** der Transporteur ein um eine vertikale Maschinenachse (VA) umlaufend antreibbarer Drehtisch (1) ist, und dass die Beleuchtungseinrichtung (4) an seiner das Licht aussendenden und der Bewegungsbahn der Behälter (4) zugewandten Seite dieser Bewegungsbahn entsprechend gekrümmt ist.

6. System nach Anspruch 5, **dadurch gekennzeichnet, dass** die Beleuchtungseinrichtung (9) oder die diese Einrichtung bildende Lichtquelle so gekrümmt sind, dass sie über die gesamte Länge oder zumindest über einen Großteil ihrer Länge einen konstanten oder im Wesentlichen konstanten Abstand von der Bewegungsbahn der Behälter (4) aufweisen.

7. System nach einem der vorhergehenden Ansprüche, **dadurch gekennzeichnet, dass** die wenigstens eine Kameraanordnung (8) und die wenigstens eine dieser zugeordnete Beleuchtungseinrichtung (9) an der der Maschinenachse (VA) abgewandten Seite der Bewegungsbahn der Behälter (4) angeordnet sind.

8. System nach einem der vorhergehenden Ansprüche, **dadurch gekennzeichnet, dass** die wenigstens eine Beleuchtungseinrichtung (9) an ihrer Licht aussendenden Seite eine konstante oder im Wesentlichen konstante Leuchtstärke aufweist.

9. System nach einem der vorhergehenden Ansprüche, **dadurch gekennzeichnet, dass** die Beleuchtungseinrichtung (9) von einer Vielzahl von elektrisch betriebenen, Licht aussendenden Elementen, beispielsweise von LEDs (13) gebildet ist.

10. System nach einem der vorhergehenden Ansprüche, **dadurch gekennzeichnet, dass** die wenigstens eine Kameraanordnung (8) zumindest zwei in Bewegungsrichtung (A) des Transporteurs (1) aufeinander folgende Kameras (10) aufweist.

## Claims

1. A system comprising a bottle or container treatment machine, comprising a transporter (1) for bottles or similar containers (4) and a optoelectric detection system for detecting profile and/or shape features (4.1) of bottles or similar containers (4) moved on the transporter (1) in a transport direction (A), with at least one camera arrangement (8) comprising at least one electronic camera (10), and with at least one illumination device (9) allocated to it for illuminating the containers (4) at least in the region of their profile and/or shape features (4.1) which are to be detected with the detection system, wherein the at least one illumination device (9) is configured as a light source extending in strip form along the transport direction of the containers (4), and the lighting device (9) and/or the at least one camera (10) can be adjusted relative to one another for different impingement angles of the light and/or for different angles of image detection, **characterised in that** the at least one illumination device (9) can be adjusted between a position beneath the camera arrangement (8) and a position above the camera arrangement (8), and/or that the at least one camera arrangement (8) can be adjusted between a position beneath the illumination device (9) and a position above the lighting device (9).

2. System according to claim 1, **characterised in that** the at least one illumination device (9) is configured for illumination with incident light.

3. System according to claim 1 or 2, **characterised in that** the at least one camera arrangement (8) and the at least one illumination device (9) allocated to it are provided on one common side of the transport path of the containers (4).

4. System according to any one of the preceding claims, **characterised in that** the at least one camera arrangement (8) and/or the at least one illumination device (9) can be adjusted between a position beneath a transport path on which the profile and/or shape features (4.1) of the containers (4) move, and a position above said transport path.

5. System according to any one of the preceding claims, **characterised in that** the transporter is a rotating table (1) which can be driven such as to circulate about a vertical machine axis (VA), and that the illumination device (4) is curved on its side which emits the light and faces towards the transport path of the containers (4), corresponding to this transport path.

6. System according to claim 5, **characterised in that** the illumination device (9), or the light source forming this device, is curved in such a way that it exhibits over its entire length, or at least over a great part of its length, a constant or essentially constant distance interval from the transport path of the containers (4).

7. System according to any one of the preceding claims, **characterised in that** the at least one camera arrangement (8), and the at least one lighting device (9) allocated to this, are arranged on the side of the transport path of the containers (4) facing away from the machine axis (VA).

8. System according to any one of the preceding claims, **characterised in that** the at least one illumination device (9) exhibits on its side emitting the light a constant or essentially constant light intensity.

9. System according to any one of the preceding claims, **characterised in that** the illumination device (9) is formed from a plurality of electrically driven elements emitting light, for example LED's (13).

10. System according to any one of the preceding claims, **characterised in that** the at least one camera arrangement (8) comprises cameras (10) which follow one another in the transport direction (A) of the transporter (1).

## Revendications

1. Système contenant une machine de manipulation de bouteilles ou de récipients contenant un transporteur (1) pour bouteilles ou récipients analogues (4) et un système de détection optoélectrique pour la détection de caractéristiques de profil et/ou de conception (4.1) de bouteilles ou récipients analogues (4) déplacés sur le transporteur (1) dans un sens de transport (A), avec au moins un agencement de caméra (8) présentant une caméra électronique (10) ainsi qu'avec au moins un dispositif d'éclairage (9) associé pour l'éclairage des récipients (4) au moins dans la zone de leurs caractéristiques de profil et/ou de conception (4.1) à détecter avec le système de détection, dans lequel l'au moins un dispositif d'éclairage (9) est réalisé en tant que source de lumière en forme de bande, s'étendant dans le sens de déplacement des récipients (4), et le dispositif d'éclairage (9) et/ou l'au moins une caméra (10) sont réglables l'un par rapport à l'autre pour différents angles d'incidence de la lumière et/ou pour différents angles de la détection d'image,
**caractérisé en ce que** l'au moins un dispositif d'éclairage (9) est réglable entre une position en dessous de l'agencement de caméra (8) et une position au-dessus de l'agencement de caméra (8), et/ou que l'au moins un agencement de caméra (8) est réglable entre une position en dessous du dispositif d'éclairage (9) et une position au-dessus du dispositif d'éclairage (9).

2. Système selon la revendication 1, **caractérisé en ce que** l'au moins un dispositif d'éclairage (9) est réalisé pour un éclairage avec lumière incidente.

3. Système selon la revendication 1 ou 2, **caractérisé en ce que** l'au moins un agencement de caméra (8) et l'au moins un dispositif d'éclairage (9) afférent sont prévus au niveau d'un côté commun de la trajectoire des récipients (4).

4. Système selon l'une quelconque des revendications précédentes, **caractérisé en ce que** l'au moins un agencement de caméra (8) et/ou l'au moins un dispositif d'éclairage (9) sont réglables entre une position en dessous d'une trajectoire, sur laquelle les caractéristiques de profil et/ou de conception (4.1) des récipients (4) se déplacent, et une position au-dessus de cette trajectoire.

5. Système selon l'une quelconque des revendications précédentes, **caractérisé en ce que** le transporteur est une table tournante (1) pouvant être entraînée en rotation autour d'un axe de machine vertical (VA), et que le dispositif d'éclairage (4) est courbé au niveau de son côté émettant la lumière et tourné vers la trajectoire des récipients (4) de manière correspondante à cette trajectoire.

6. Système selon la revendication 5, **caractérisé en ce que** le dispositif d'éclairage (9) ou la source de lumière formant ce dispositif sont courbés de telle sorte qu'ils présentent sur toute la longueur ou au moins sur une grande partie de leur longueur, une distance constante ou sensiblement constante par rapport à la trajectoire des récipients (4).

7. Système selon l'une quelconque des revendications précédentes, **caractérisé en ce que** l'au moins un agencement de caméra (8) et l'au moins un dispositif d'éclairage (9) associé à celui-ci sont agencés au niveau du côté de la trajectoire des récipients (4) opposé à l'axe de machine (VA).

8. Système selon l'une quelconque des revendications précédentes, **caractérisé en ce que** l'au moins un dispositif d'éclairage (9) présente au niveau de son côté émettant de la lumière une intensité lumineuse constante ou sensiblement constante.

9. Système selon l'une quelconque des revendications précédentes, **caractérisé en ce que** le dispositif d'éclairage (9) est formé par une pluralité d'éléments émettant de lumière à fonctionnement électrique, par exemple par des LED (13).

10. Système selon l'une quelconque des revendications précédentes, **caractérisé en ce que** l'au moins un agencement de caméra (8) présente au moins deux caméras (10) successives dans le sens de déplacement (A) du transporteur (1).
